# EUROPEAN PATENT APPLICATION

(11) **EP 1 441 535 A2**
(43) Date of publication of application: **28.07.2004**
(21) Application number: 04000133.1
(22) Date of filing: 07.01.2004
(51) Int. Cl.: H04N 7/24

(54) **Video data stream processing**

(30) Priority: 21.01.2003 JP 2003012272
(71) Applicant: Victor Company of Japan, Ltd., Yokohama 221-0022 (JP)
(72) Inventor: Chiku, Mamoru, Sagamihara-shi Kanagawa-ken (JP); Nakamura, Akira, Yokosuka-shi Kanagawa-ken (JP)
(74) Representative: Manitz, Finsterwald & Partner GbR

(57) **Abstract**

First AV data result from a first encoding procedure. Second AV data result from a second encoding procedure. A first switch selects one from the first AV data and the second AV data. A second switch selects one from the AV data selected by the first switch and fixed-pattern AV data. An outputting device operates for outputting the AV data selected by the second switch. A type of encoding about the AV data outputted by the outputting device is designated among different types corresponding to the first and second encoding procedures respectively. The second switch is controlled to select the AV data selected by the first switch when the encoding procedure related to the AV data selected by the first switch corresponds to the designated encoding type, and is controlled to select the fixed-pattern AV data when the encoding procedure does not correspond to the designated encoding type.

## Description

### BACKGROUND OF THE INVENTION

### Field of the Invention

This invention generally relates to an imaging apparatus which can output AV (audio video) data containing video data and audio data. This invention particularly relates to an apparatus for outputting AV data.

### Description of the Related Art

Some interfaces in digital AV devices conform to the IEEE 1394-1995 high performance serial bus standards. IEEE 1394 interfaces can provide high-data-rate communications. The data rate of communications provided by a typical IEEE 1394 interface for connection between a main device and an external device is in the range of 100 Mbps to 400 Mbps. The communication data rate is expected to be increased to 1.6 Gbps.

An IEEE 1394 interface can operate in an isochronous mode which is suited for the case where priority is given to real-time processing of data such as moving picture data or audio data. The isochronous mode of operation guarantees a proper data transmission rate without using acknowledgment packets.

Japanese patent application publication number 2000-115601 discloses a video camera having an IEEE 1394 interface, that is, a digital communication interface which conforms to the IEEE1394-1995 high performance serial bus standards.

The IEEE 1394 interface standards prescribe the specifications of a physical connection cable and a transmission procedure. However, the IEEE 1394 standards do not prescribe the protocol for information transmitted between devices (applications) via a connection cable and the data format used by the devices.

Conventional protocols include an SBP-2 (a serial bus protocol-2) and a DPP (a direct printing protocol). The SBP-2 is designed for a recording medium drive such as a hard disk drive or an MO drive. The DPP is designed for direct connection with a printer.

In the case where the protocols used by respective digital AV devices (for example, a digital video camera and a digital VTR) are different, the digital AV devices can not transmit video data and audio data to each other via IEEE 1394 interfaces even though the same data format is used by the digital AV devices. For example, a digital still camera able to implement DPP-based communications only can not correctly transmit video data to a hard disk drive or a printer having a communication unit designed exclusively for SBP-2-based communications.

Similarly, in the case where the data formats used by respective digital AV devices are different, the digital AV devices can not communicate with each other via IEEE 1394 interfaces even though the same protocol is used by the digital AV devices.

When the protocols or the data formats used by the respective digital AV devices are different, the protocol or the data format used by the transmission-side device can not be handled by the reception-side device. In this case, the feed of information concerning the non-handleable protocol or the non-handleable data format to the reception-side device tends to cause wrong operation of the reception-side device.

### SUMMARY OF THE INVENTION

It is a first object of this invention to provide an imaging apparatus outputting a digital AV signal of a format which can be selected from different types in accordance with the data format used by a digital device connected thereto.

It is a second object of this invention to provide an imaging apparatus which can output AV data of a fixed value in an undesired case to prevent wrong operation of a digital device connected thereto.

It is a third object of this invention to provide an AV data outputting apparatus designed to output a digital AV signal of a format which can be selected from different types in accordance with the data format used by a digital device connected thereto.

It is a fourth object of this invention to provide an AV data outputting apparatus designed to output AV data of a fixed value in an undesired case to prevent wrong operation of a digital device connected thereto.

A first aspect of this invention provides an AV data outputting apparatus comprising first selecting means (SW2) for selecting one from first AV data and second AV data, the first AV data resulting from encoding original data in a first encoding procedure, the second AV data resulting from encoding the original data in a second encoding procedure different from the first encoding procedure; fixed-pattern data generating means (112c) for generating third AV data representative of either a first fixed pattern or a second fixed pattern, the first fixed pattern corresponding to the first encoding procedure, the second fixed pattern corresponding to the second encoding procedure; second selecting means (SW3) for selecting one from the AV data selected by the first selecting means (SW2) and the third AV data generated by the fixed-pattern data generating means (112c); outputting means (112d, 112e) for outputting the AV data selected by the second selecting means (SW3); output data type designating means (110b) for designating a type of encoding about the AV data outputted by the outputting means (112d, 112e) among different types corresponding to the first and second encoding procedures respectively; deciding means (111) for deciding whether or not the encoding procedure related to the AV data selected by the first selecting means (SW2) corresponds to the encoding type designated by the output data type designating means (110b) ; and controlling means (111) for controlling the second selecting means (SW3) to select the AV data selected by the first selecting means (SW2) when the deciding means (111) decides that the encoding procedure related to the AV data selected by the first selecting means (SW2) corresponds to the encoding type designated by the output data type designating means (110b), and controlling the second selecting means (SW3) to select the third AV data generated by the fixed-pattern data generating means (112c) and being representative of one of the first and second fixed patterns which corresponds to the encoding type designated by the output data type designating means (110b) when the deciding means (111) decides that the encoding procedure related to the AV data selected by the first selecting means (SW2) does not correspond to the encoding type designated by the output data type designating means (110b).

A second aspect of this invention is based on the first aspect thereof, and provides an AV data outputting apparatus further comprising a camera device (101) for outputting the original data; a first encoder (103) for encoding the original data outputted by the camera device (101) in the first encoding procedure to generate the first AV data; and a second encoder (104) for encoding the original data outputted by the camera device (101) in the second encoding procedure to generate the second AV data.

A third aspect of this invention is based on the second aspect thereof, and provides an AV data outputting apparatus further comprising a recording medium (107), and recording means (105, 106) for recording the first and second AV data generated by the first encoder (103) and the second encoder (104) on the recording medium (107).

A fourth aspect of this invention is based on the first aspect thereof, and provides an AV data outputting apparatus further comprising a recording medium (107); reproducing means (108, 109) for reproducing a signal from the recording medium (107); a first processor (112a) for generating the first AV data from the signal reproduced by the reproducing means (108, 109), and feeding the first AV data to the first selecting means (SW2); a second processor (112a) for generating the second AV data from the signal reproduced by the reproducing means (108, 109), and feeding the second AV data to the first selecting means (SW2); second deciding means (111) for deciding whether the signal reproduced by the reproducing means (108, 109) corresponds to the first encoding procedure or the second encoding procedure; and second controlling means (111) for controlling the first selecting means (SW2) to select the first AV data when the second deciding means (111) decides that the signal reproduced by the reproducing means (108, 109) corresponds to the first encoding procedure, and controlling the first selecting means (111) to select the second AV data when the second deciding means (111) decides that the signal reproduced by the reproducing means (108, 109) corresponds to the second encoding procedure.

A fifth aspect of this invention is based on the first aspect thereof, and provides an AV data outputting apparatus wherein the first encoding procedure is a DV encoding procedure, and the second encoding procedure is an MPEG encoding procedure.

A sixth aspect of this invention is based on the first aspect thereof, and provides an AV data outputting apparatus wherein the outputting means (112d, 112e) comprises means (112d, 112e) for outputting the AV data selected by the second selecting means (SW3) according to an isochronous transmission procedure prescribed by the IEEE 1394-1995 standards.

A seventh aspect of this invention provides an AV data outputting apparatus comprising first selecting means (SW2) for selecting one from first AV data and second AV data, the first AV data resulting from encoding original data in a first encoding procedure, the second AV data resulting from encoding the original data in a second encoding procedure different from the first encoding procedure; fixed-pattern data generating means (112c) for selectively generating either third AV data or fourth AV data, the third AV data corresponding to the first encoding procedure, the fourth AV data corresponding to the second encoding procedure, the third AV data and the fourth AV data representing a fixed pattern; second selecting means (SW3) for selecting one from the AV data selected by the first selecting means (SW2) and the AV data generated by the fixed-pattern data generating means (112c); outputting means (112d, 112e) for outputting the AV data selected by the second selecting means (SW3); output data type designating means (110b) for designating a type of encoding about the AV data outputted by the outputting means (112d, 112e) among different types corresponding to the first and second encoding procedures respectively; deciding means (111) for deciding whether or not the encoding procedure related to the AV data selected by the first selecting means (SW2) corresponds to the encoding type designated by the output data type designating means (110b); and controlling means (111) for controlling the second selecting means (SW3) to select the AV data selected by the first selecting means (SW2) when the deciding means (111) decides that the encoding procedure related to the AV data selected by the first selecting means (SW2) corresponds to the encoding type designated by the output data type designating means (110b), and controlling the fixed-pattern data generating means (112c) to generate the AV data corresponding to the encoding type designated by the output data type designating means (110b) and controlling the second selecting means (SW3) to select the AV data generated by the fixed-pattern data generating means (112c) when the deciding means (111) decides that the encoding procedure related to the AV data selected by the first selecting means (SW2) does not correspond to the encoding type designated by the output data type designating means (110b).

An eighth aspect of this invention provides an imaging apparatus comprising a switch for selecting one from first AV data and second AV data, the first AV data resulting from either a first encoding procedure or a second encoding procedure different from the first encoding procedure, the second AV data representing a fixed-pattern and being of either a format corresponding to the first encoding procedure or a format corresponding to the second encoding procedure; first means for loading isochronous packets with the AV data selected by the switch, and sequentially outputting the isochronous packets; second means for designating a requested type of encoding about the AV data carried by the isochronous packets outputted by the first means among different types corresponding to the first and second encoding procedures respectively; third means for deciding whether or not the encoding procedure related to the first AV data corresponds to the requested encoding type designated by the second means; fourth means for controlling the switch to select the first AV data when the third means decides that the encoding procedure related to the first AV data corresponds to the requested encoding type designated by the second means; and fifth means for causing the second AV data to be of the format corresponding to the requested encoding type designated by the second means and controlling the switch to select the second AV data when the third means decides that the encoding procedure related to the first AV data does not correspond to the requested encoding type designated by the second means.

A ninth aspect of this invention provides an imaging apparatus comprising a first switch for selecting one from first AV data and second AV data, the first AV data resulting from a first encoding procedure, the second AV data resulting from a second encoding procedure different from the first encoding procedure; first means for generating third AV data representative of a fixed pattern and being of either a format corresponding to the first encoding procedure or a format corresponding to the second encoding procedure; a second switch for selecting one from the AV data selected by the first switch and the third AV data generated by the first means; second means for loading isochronous packets with the AV data selected by the second switch, and sequentially outputting the isochronous packets; third means for designating a requested type of encoding about the AV data carried by the isochronous packets outputted by the second means among different types corresponding to the first and second encoding procedures respectively; fourth means for deciding whether or not the encoding procedure related to the AV data selected by the first switch corresponds to the requested encoding type designated by the third means; fifth means for controlling the second switch to select the AV data selected by the first switch when the fourth means decides that the encoding procedure related to the AV data selected by the first switch corresponds to the requested encoding type designated by the third means; and sixth means for controlling the first means to cause the third AV data generated by the first means to be of the format corresponding to the requested encoding type designated by the third means and controlling the second switch to select the third AV data generated by the first means when the fourth means decides that the encoding procedure related to the AV data selected by the first switch does not correspond to the requested encoding type designated by the third means.

A tenth aspect of this invention is based on the ninth aspect thereof, and provides an imaging apparatus further comprising a recording medium; seventh means for reproducing a signal from the recording medium; a first processor for generating the first AV data from the signal reproduced by the seventh means, and feeding the first AV data to the first switch; a second processor for generating the second AV data from the signal reproduced by the seventh means, and feeding the second AV data to the first switch; eighth means for deciding whether the signal reproduced by the seventh means corresponds to the first encoding procedure or the second encoding procedure; ninth means for controlling the first switch to select the first AV data when the eighth means decides that the signal reproduced by the seventh means corresponds to the first encoding procedure; and tenth means for controlling the first switch to select the second AV data when the eighth means decides that the signal reproduced by the seventh means corresponds to the second encoding procedure.

### BRIEF DESCRIPTION OF THE DRAWINGS

Fig. 1 is a block diagram of an imaging apparatus according to a first embodiment of this invention.
Fig. 2 is a block diagram of an IEEE 1394 interface and devices adjacent thereto in Fig. 1.
Fig. 3 is a flowchart of a segment of a computer program for a system control CPU in Figs. 1 and 2.
Fig. 4 is a diagram of an isochronous packet loaded with DV data.
Fig. 5 is a diagram of the contents of a 1-track amount of DV data.
Fig. 6 is a diagram of the relation between MPEG transport packets and isochronous packets.

### DETAILED DESCRIPTION OF THE INVENTION

### First Embodiment

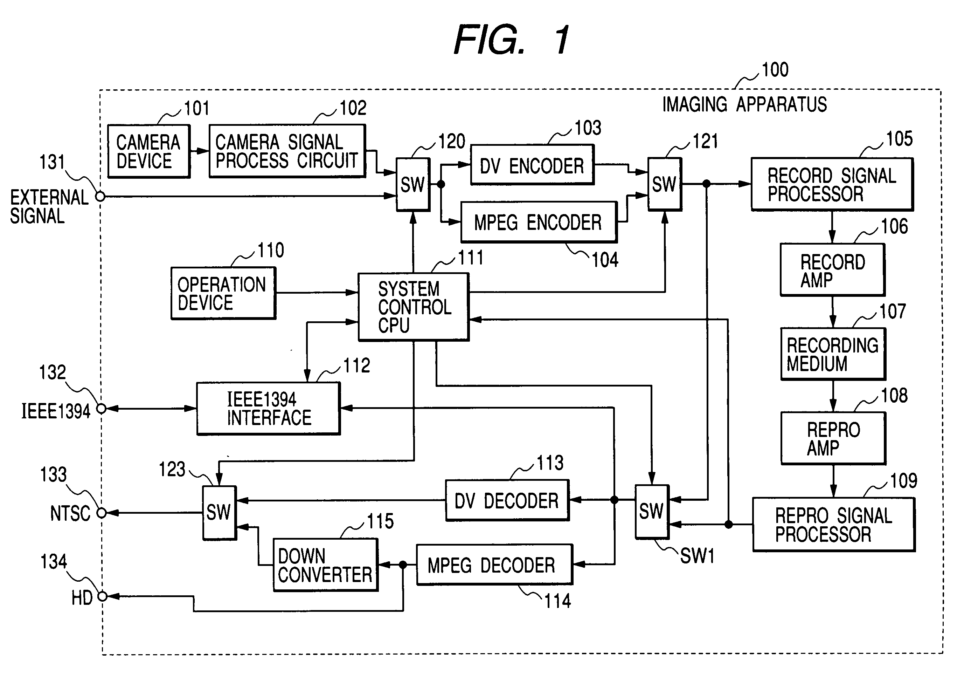

Fig. 1 shows an imaging apparatus 100 according to a first embodiment of this invention. The imaging apparatus 100 includes a video camera using an imaging element array 101 which is also referred to as a camera device. The imaging apparatus 100 uses an encoding and decoding system which can be selected from a digital video camera system and an MPEG system. The digital video camera system conforms to the prescriptions decided by the HD Digital VCR Conference. The digital video camera system is also referred to as the DV system. The imaging apparatus 100 includes a recording medium 107 on and from which an audio video (AV) signal can be recorded and reproduced.

Light representing an image of a scene is applied to the imaging element array (the camera device) 101 through a lens not shown. The imaging element array 101 converts the applied light into an electrical signal representing the image. The imaging element array 101 outputs the image signal to a camera signal processing circuit 102. The camera signal processing circuit 102 processes the image signal into a video signal of, for example, an NTSC format. The camera signal processing circuit 102 outputs the video signal to a switch 120.

The imaging apparatus 100 has an input terminal 131 for receiving an external video signal. The external video signal can be fed via the input terminal 131 to the switch 120.

The imaging apparatus 100 includes an operation device 110 which can be actuated by a user. The operation device 110 generates a selection signal in accordance with its actuation by the user. The operation device 110 feeds the selection signal to a system control CPU 111. The system control CPU 111 generates control signals for the switch 120 and a switch 121 in response to the selection signal. The system control CPU 111 feeds the control signals to the switches 120 and 121, respectively. The switch 120 selects one from the video signal outputted by the camera signal processing circuit 102 and the video signal fed via the input terminal 131 in accordance with the control signal fed from the system control CPU 111. The switch 120 passes the selected video signal to a DV encoder 103 and an MPEG encoder 104.

The DV encoder 103 encodes the video signal into AV data of a DV format (a digital video camera format). The DV encoder 103 applies the DV-format AV data to the switch 121. The MPEG encoder 104 encodes the video signal into AV data of an MPEG format. The MPEG encoder 104 applies the MPEG-format AV data to the switch 121.

The switch 121 selects one from the DV-format AV data and the MPEG-format AV data in accordance with the control signal fed from the system control CPU 111. The switch 121 passes the selected AV data to a recording signal processor 105 and a switch SW1.

The recording signal processor 105 subjects the AV data to a mapping process and an ID-signal adding process to generate an AV signal to be recorded. The AV signal is transmitted from the recording signal processor 105 to a head (not shown) through a recording amplifier 106, being recorded on the recording medium 107 by the head.

The head can reproduce an AV signal from the recording medium 107. The reproduced AV signal is transmitted from the head to a reproducing signal processor 109 via a reproducing amplifier 108. The reproducing signal processor 109 subjects the reproduced AV signal to processes inverse to those by the recording signal processor 105 to reproduce original AV data. The reproducing signal processor 109 applies the reproduced AV data to the switch SW1 and the system control CPU 111.

The system control CPU 111 generates a control signal for the switch SW1, and feeds the generated control signal thereto. The switch SW1 selects one from the AV data outputted by the switch 121 and the AV data outputted by the reproducing signal processor 109 in accordance with the control signal fed from the system control CPU 111. The switch SW1 passes the selected AV data to a DV decoder 113, an MPEG decoder 114, and an IEEE 1394 interface 112.

When the AV data are of the DV format, the DV decoder 113 correctly decodes the AV data into an original video signal. The operation of the DV decoder 113 is inverse with respect to that of the DV encoder 103. The DV decoder 113 applies the video signal to a switch 123. When the AV data are of the MPEG format, the MPEG decoder 114 correctly decodes the AV data into an original video signal. The operation of the MPEG decoder 114 is inverse with respect to that of the MPEG encoder 104. The MPEG decoder 114 applies the video signal to a down converter 115 and an output terminal 134 for a high definition (HD) signal. The video signal can be transmitted via the output terminal 134 to an external device. The down converter 115 changes the video signal into a corresponding NTSC signal. The down converter 115 applies the NTSC signal to the switch 123.

The system control CPU 111 receives the reproduced AV data from the reproducing signal processor 109. The system control CPU 111 analyzes the reproduced AV data, and thereby decides whether the reproduced AV data are of the DV format or the MPEG format. The system control CPU 111 detects the state of the control signal applied to the switch 121, and thereby decides whether the AV data directly applied from the switch 121 to the switch SW1 are of the DV format or the MPEG format. Furthermore, the system control CPU 111 detects the state of the control signal applied to the switch SW 1. By referring to the results of the above-mentioned decisions and detection, the system control CPU 111 determines whether the AV data selected by and fed from the switch SW1 are of the DV format or the MPEG format. The system control CPU 111 generates a control signal for the switch 123 in response to the result of the determination, and feeds the generated control signal to the switch 123. The switch 123 selects one from the video signal outputted by the DV decoder 113 and the video signal outputted by the down converter 115 in response to the control signal fed from the system control CPU 111. The switch 123 passes the selected video signal to an output terminal 133 for an NTSC signal. The video signal can be transmitted via the output terminal 133 to an external device.

Specifically, in the case where the AV data selected by and fed from the switch SW1 are of the DV format, the switch 123 selects the video signal outputted by the DV decoder 113. On the other hand, in the case where the AV data selected by and fed from the switch SW1 are of the MPEG format, the switch 123 selects the video signal outputted by the down converter 115.

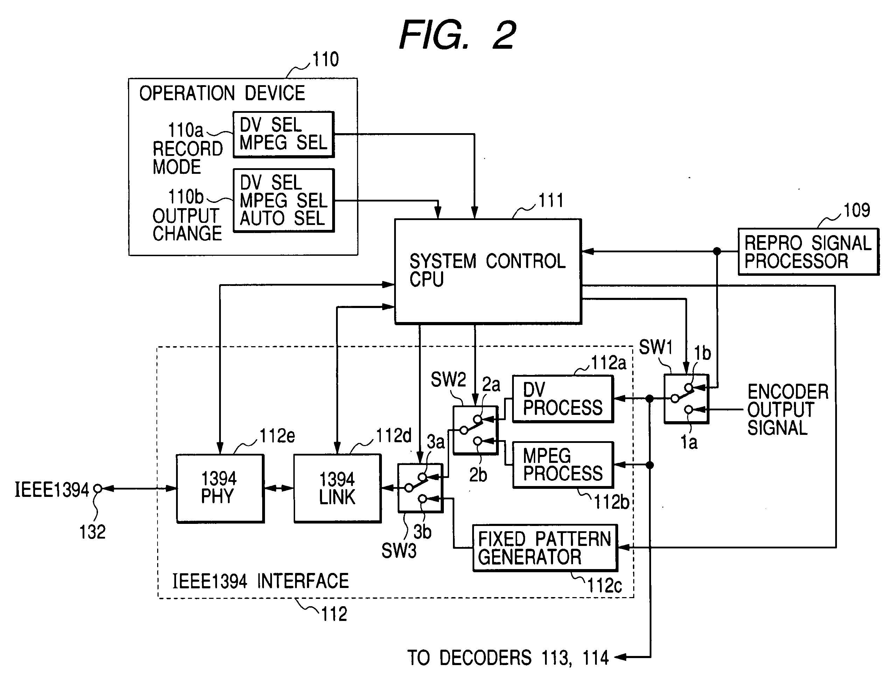

As shown in Fig. 2, the IEEE1394 interface 112 includes a DV processor 112a, an MPEG processor 112b, an adjustment data generator 112c, a 1394 link layer block 112d, a 1394 physical layer block 112e, and switches SW2 and SW3.

The switch SW1 has a control terminal for receiving the control signal from the system control CPU 111. The switch SW1 further has fixed contacts 1a and 1b, and a movable contact connected to either the fixed contact 1a or the fixed contact 1b in response to the control signal. The fixed contact 1a is connected to the switch 121 (see Fig. 1) to receive the AV data from the DV encoder 103 or the MPEG encoder 104 (see Fig. 1). The fixed contact 1b is connected to the output side of the reproducing signal processor 109. The movable contact of the switch SW1 leads to the input sides of the DV processor 112a and the MPEG processor 112b in the IEEE 1394 interface 112. The movable contact of the switch SW1 also leads to the input sides of the DV decoder 113 and the MPEG decoder 114 (see Fig. 1).

The system control CPU 111 generates control signals for the switches SW2 and SW3 in the IEEE1394 interface 112, and feeds the generated control signals to the switches SW2 and SW3 respectively.

The switch SW2 in the IEEE 1394 interface 112 has a control terminal for receiving the control signal from the system control CPU 111. The switch SW2 further has fixed contacts 2a and 2b, and a movable contact connected to either the fixed contact 2a or the fixed contact 2b in response to the control signal. The fixed contact 2a is connected to the output side of the DV processor 112a. The fixed contact 2b is connected to the output side of the MPEG processor 112b. The movable contact of the switch SW2 leads to the switch SW3.

The adjustment data generator 112c in the IEEE 1394 interface 112 has a control terminal for receiving a control signal from the system control CPU 111. The adjustment data generator 112c is controlled in response to the control signal.

The switch SW3 in the IEEE 1394 interface 112 has a control terminal for receiving the control signal from the system control CPU 111. The switch SW3 further has fixed contacts 3a and 3b, and a movable contact connected to either the fixed contact 3a or the fixed contact 3b in response to the control signal. The fixed contact 3a is connected to the movable contact of the switch SW2. The fixed contact 3b is connected to the output side of the adjustment data generator 112c. The movable contact of the switch SW3 leads to the 1394 link layer block 112d.

The 1394 link layer block 112d is connected with the system control CPU 111 and the 1394 physical layer block 112e. The 1394 physical layer block 112e is connected with the system control CPU 111 and an IEEE 1394 input/output terminal 132 of the imaging apparatus 100 (see Fig. 1).

The DV processor 112a and the MPEG processor 112b receive the AV data selected by and fed from the switch SW 1. When the AV data are of the DV format, the DV processor 112a converts the AV data into a stream of data blocks (DIF blocks) conforming to the DV standards. In addition, the DV processor 112a generates CIP (common isochronous packet) header information, and adds the CIP header information to the data block stream. The DV processor 112a outputs the CIP-header-added data block stream to the switch SW2. When the AV data are of the MPEG format, the MPEG processor 112b converts the AV data into a stream of MPEG transport packets conforming to the MPEG standards. In addition, the MPEG processor 112b generates time stamps, and adds the time stamps to the respective MPEG transport packets. The MPEG processor 112b divides each time-stamp-added MPEG transport packet into equal-size segments to generate an MPEG-transport packet segment stream. Furthermore, the MPEG processor 112b generates CIP header information, and adds the CIP header information to the MPEG transport packet segment stream. The MPEG processor 112b outputs the MPEG transport packet segment stream inclusive of the time stamps and the CIP header information to the switch SW2.

The switch SW2 selects one from the data block stream outputted by the DV processor 112a and the MPEG transport packet segment stream outputted by the MPEG processor 112b in response to the control signal fed from the system control CPU 111. The switch SW2 passes the selected stream to the switch SW3. The selected stream is also referred to as the streaming data.

The adjustment data generator 112c produces dummy data in response to the control signal fed from the system control CPU 111. The dummy data include data representative of a fixed value or a fixed pattern. Preferably, the dummy data are of one selected, in response to the control signal, from first and second different formats equivalent to those concerning the output signals from the DV processor 112a and the MPEG processor 112b respectively. Thus, the dummy data correspond to one of the encoding procedures (the DV encoding procedure and the MPEG encoding procedure) relating to the output signals from the DV processor 112a and the MPEG processor 112b. The dummy data of the format (the first format) corresponding to the DV encoding procedure and the dummy data of the format (the second format) corresponding to the MPEG encoding procedure may be representative of different fixed patterns, respectively. The dummy data of the format corresponding to the DV encoding procedure are called the DV dummy data. The dummy data of the format corresponding to the MPEG encoding procedure are called the MPEG dummy data. The adjustment data generator 112c outputs the dummy data to the switch SW3.

The switch SW3 selects one from the stream (the streaming data) outputted by the switch SW2 and the dummy data outputted by the adjustment data generator 112c in response to the control signal fed from the system control CPU 111. The switch SW3 passes the selected data to the 1393 link layer block 112d.

The 1394 link layer block 112d constitutes a link layer in which the types of various packets transmitted along an IEEE 1394 bus and also an error check procedure are defined. The 1394 physical layer block 112e constitutes a physical layer in which the electrical specifications of a serial signal and a serial-signal encoding system, and also a mediating procedure about use of a bus are decided.

The combination of the 1394 link layer block 112d and the 1394 physical layer block 112e converts the output data from the switch SW3 into isochronous packets (packets conforming to the IEEE 1394 standards) while being controlled by the system control CPU 111. This conversion includes a step of generating isochronous packet headers, and a step of mapping the output data from the switch SW3 onto isochronous packets (IEEE1394 packets). The 1394 physical layer block 112e applies a sequence of the resultant isochronous packets to the IEEE 1394 input/output terminal 132. The isochronous packet sequence is transmitted via the IEEE 1394 input/output terminal 132 to an external device.

As shown in Fig. 2, the operation device 110 includes a recording-mode-related section 110a and an output-change-related section 110b provided with buttons or combinations of buttons and menu indicators. The imaging apparatus 100 can operate in a mode selected from various modes including a recording mode and a playback mode (a reproducing mode). During the recording mode of operation, the imaging apparatus 100 records an AV signal on the recording medium 107. During the playback mode of operation, the imaging apparatus 100 reproduces an AV signal from the recording medium 107. The recording mode of operation of the imaging apparatus 100 can be changed among different types including a DV type (a type for recording an AV signal of the DV format) and an MPEG type (a type for recording an AV signal of the MPEG format). The user can change the recording mode of operation between the DV type and the MPEG type by actuating the recording-mode-related section 110a of the operation device 110. The recording-mode-related section 110a generates a selection signal in accordance with its actuation by the user. The selection signal represents a requested type of the recording mode of operation. The recording-mode-related section 110a feeds the selection signal to the system control CPU 111.

The output signal (a sequence of IEEE 1394 packets) from the IEEE 1394 interface 112 can be changed among different types including a DV type (a type corresponding to AV data of the DV format), an MPEG type (a type corresponding to AV data of the MPEG format), and an automatic type. The user can change the type of the output signal of the IEEE 1394 interface 112 by actuating the output-change-related section 110b of the operation device 110. The output-change-related section 110b generates a selection signal in accordance with its actuation by the user. The selection signal represents a requested type of the output signal of the IEEE 1394 interface 112. The output-change-related section 110b feeds the selection signal to the system control CPU 111.

The system control CPU 111 includes a combination of an input/output port, a processing section, a ROM, and a RAM. The system control CPU 111 operates in accordance with a computer program stored in the ROM or the RAM.

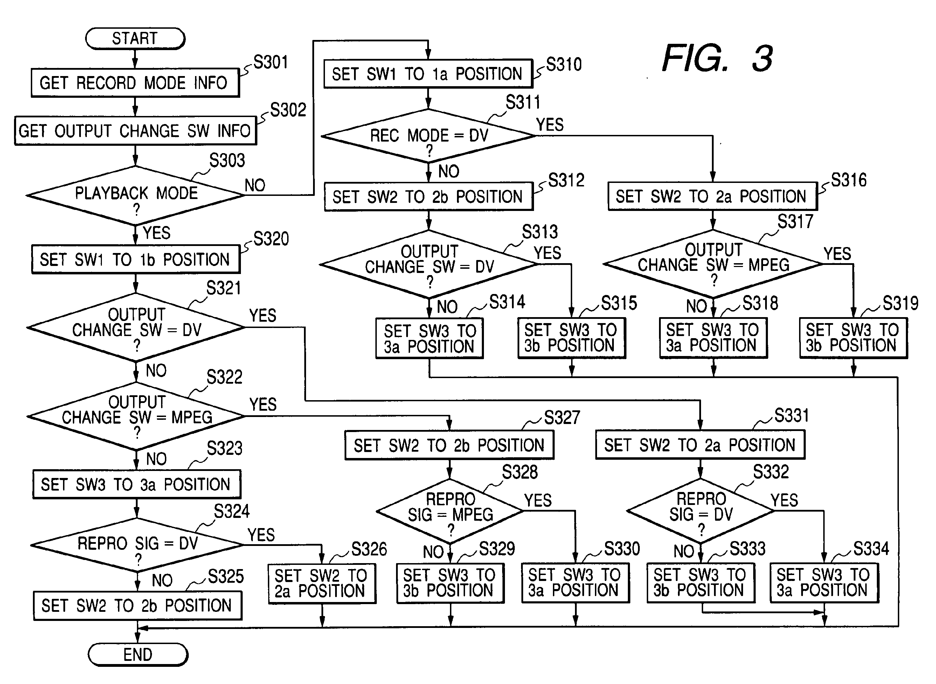

Fig. 3 is a flowchart of a segment of the computer program for the system control CPU 111 which relates to the change of the type of the output signal of the IEEE 1394 interface 112. The program segment in Fig. 3 is repetitively executed.

With reference to Fig. 3, a first step S301 of the program segment gets information (recording mode type information) about the requested type of the recording mode from the selection signal outputted by the recording-mode-related section 110a in the operation device 110.

A step S302 following the step S301 gets information (output type information) about the requested type of the output signal of the IEEE 1394 interface 112 from the selection signal outputted by the output-change-related section 110b in the operation device 110.

A step S303 subsequent to the step S302 decides whether or not the imaging apparatus 100 is operating in the playback mode (the reproducing mode) by referring to information stored in the system control CPU 111 which indicates the current status of the imaging apparatus 100. When the imaging apparatus 100 is operating in the playback mode, the program advances from the step S303 to a step S320. Otherwise, the program advances from the step S303 to a step S310.

The step S310 connects the movable contact of the switch SW1 to its fixed contact 1a. As a result, the switch SW1 selects the AV data outputted by the switch 121, and passes the selected AV data to the IEEE 1394 interface 112. The AV data outputted by the switch 121 are the DV-format AV data generated by the DV encoder 103 or the MPEG-format AV data generated by the MPEG encoder 104.

A step S311 following the step S310 refers to the recording mode type information, and decides whether or not the requested type of the recording mode is the DV type. When the requested type of the recording mode is the DV type, the program advances from the step S311 to a step S316. Otherwise, the program advances from the step S311 to a step S312.

The step S316 connects the movable contact of the switch SW2 to its fixed contact 2a. As a result, the switch SW2 selects the data block stream outputted by the DV processor 112a, and passes the selected stream to the switch SW3.

A step S317 subsequent to the step S316 refers to the output type information, and thereby decides whether or not the requested type of the output signal of the IEEE 1394 interface 112 is the MPEG type. When the requested type of the output signal of the IEEE 1394 interface 112 is the MPEG type, the program advances from the step S317 to a step S319. Otherwise, the program advances from the step S317 to a step S318.

The step S319 connects the movable contact of the switch SW3 to its fixed contact 3b. As a result, the switch SW3 selects the dummy data outputted by the adjustment data generator 112c, and passes the selected dummy data to the 1394 link layer block 112d. Preferably, the step S319 controls the adjustment data generator 112c so that the dummy data generated and outputted by the adjustment data generator 112c will be of the format corresponding to the MPEG encoding procedure. After the step S319, the current execution cycle of the program segment ends.

In the case where the requested type of the recording mode is the DV type while the requested type of the output signal of the IEEE1394 interface 112 is the MPEG type, the program enters the step S319 so that the dummy data are made to correspond to the MPEG encoding procedure and the switch SW3 is controlled to feed the dummy data to the 1394 link layer block 112d. Thus, in this case, the combination of the 1394 link layer block 112d and the 1394 physical layer block 112e generates IEEE 1394 packets loaded with the dummy data (the MPEG dummy data). The IEEE 1394 packets loaded with the dummy data are transmitted from the IEEE 1394 interface 112 to an external device via the IEEE 1394 input/output terminal 132.

The step S318 connects the movable contact of the switch SW3 to its fixed contact 3a. As a result, the switch SW3 selects the streaming data outputted by the switch SW2, and passes the selected streaming data to the 1394 link layer block 112d. After the step S318, the current execution cycle of the program segment ends.

In the case where the requested type of the recording mode is the DV type and the requested type of the output signal of the IEEE 1394 interface 112 is the DV type or the automatic type, the program advances through the steps S316 and S318 so that the switches SW2 and SW3 are controlled to feed the data block stream inclusive of the DV data to the 1394 link layer block 112d. Thus, in this case, the combination of the 1394 link layer block 112d and the 1394 physical layer block 112e generates IEEE 1394 packets loaded with the DV data. The IEEE 1394 packets loaded with the DV data are transmitted from the IEEE 1394 interface 112 to an external device via the IEEE 1394 input/output terminal 132.

The step S312 connects the movable contact of the switch SW2 to its fixed contact 2b. As a result, the switch SW2 selects the MPEG transport packet segment stream outputted by the MPEG processor 112b, and passes the selected stream to the switch SW3.

A step S313 subsequent to the step S312 refers to the output type information, and thereby decides whether or not the requested type of the output signal of the IEEE 1394 interface 112 is the DV type. When the requested type of the output signal of the IEEE 1394 interface 112 is the DV type, the program advances from the step S313 to a step S315. Otherwise, the program advances from the step S313 to a step S314.

The step S314 connects the movable contact of the switch SW3 to its fixed contact 3a. As a result, the switch SW3 selects the streaming data outputted by the switch SW2, and passes the selected streaming data to the 1394 link layer block 112d. After the step S314, the current execution cycle of the program segment ends.

In the case where the requested type of the recording mode is the MPEG type and the requested type of the output signal of the IEEE 1394 interface 112 is the MPEG type or the automatic type, the program advances through the steps S312 and S314 so that the switches SW2 and SW3 are controlled to feed the MPEG transport packet segment stream to the 1394 link layer block 112d. Thus, in this case, the combination of the 1394 link layer block 112d and the 1394 physical layer block 112e generates IEEE 1394 packets loaded with the MPEG data. The IEEE 1394 packets loaded with the MPEG data are transmitted from the IEEE 1394 interface 112 to an external device via the IEEE1394 input/output terminal 132.

The step S315 connects the movable contact of the switch SW3 to its fixed contact 3b. As a result, the switch SW3 selects the dummy data outputted by the adjustment data generator 112c, and passes the selected dummy data to the 1394 link layer block 112d. Preferably, the step S315 controls the adjustment data generator 112c so that the dummy data generated and outputted by the adjustment data generator 112c will be of the format corresponding to the DV encoding procedure. After the step S315, the current execution cycle of the program segment ends.

In the case where the requested type of the recording mode is the MPEG type while the requested type of the output signal of the IEEE 1394 interface 112 is the DV type, the program enters the step S315 so that the dummy data are made to correspond to the DV encoding procedure and the switch SW3 is controlled to feed the dummy data to the 1394 link layer block 112d. Thus, in this case, the combination of the 1394 link layer block 112d and the 1394 physical layer block 112e generates IEEE1394 packets loaded with the dummy data (the DV dummy data). The IEEE1394 packets loaded with the dummy data are transmitted from the IEEE 1394 interface 112 to an external device via the IEEE 1394 input/ output terminal 132.

The step S320 connects the movable contact of the switch SW1 to its fixed contact 1b. As a result, the switch SW1 selects the AV data outputted by the reproducing signal processor 109, and passes the selected AV data to the IEEE 1394 interface 112.

A step S321 following the step S320 refers to the output type information, and thereby decides whether or not the requested type of the output signal of the IEEE 1394 interface 112 is the DV type. When the requested type of the output signal of the IEEE 1394 interface 112 is the DV type, the program advances from the step S321 to a step S331. Otherwise, the program advances from the step S321 to a step S322.

The step S331 connects the movable contact of the switch SW2 to its fixed contact 2a. As a result, the switch SW2 selects the data block stream outputted by the DV processor 112a, and passes the selected stream to the switch SW3.

A step S332 subsequent to the step S331 checks the reproduced AV data outputted by the reproducing signal processor 109, and thereby decides whether or not the reproduced AV data are of the DV format. When the reproduced AV data are of the DV format, the program advances from the step S332 to a step S334. Otherwise, the program advances from the step S332 to a step S333.

The step S334 connects the movable contact of the switch SW3 to its fixed contact 3a. As a result, the switch SW3 selects the streaming data outputted by the switch SW2, and passes the selected streaming data to the 1394 link layer block 112d. After the step S334, the current execution cycle of the program segment ends.

In the case where the requested type of the output signal of the IEEE 1394 interface 112 is the DV type and the reproduced AV data are of the DV type, the program advances through the steps S331 and S334 so that the switches SW2 and SW3 are controlled to feed the data block stream inclusive of the reproduced DV data to the 1394 link layer block 112d. Thus, in this case, the combination of the 1394 link layer block 112d and the 1394 physical layer block 112e generates IEEE 1394 packets loaded with the reproduced DV data. The IEEE 1394 packets loaded with the reproduced DV data are transmitted from the IEEE 1394 interface 112 to an external device via the IEEE 1394 input/output terminal 132.

The step S333 connects the movable contact of the switch SW3 to its fixed contact 3b. As a result, the switch SW3 selects the dummy data outputted by the adjustment data generator 112c, and passes the selected dummy data to the 1394 link layer block 112d. Preferably, the step S333 controls the adjustment data generator 112c so that the dummy data generated and outputted by the adjustment data generator 112c will be of the format corresponding to the DV encoding procedure. After the step S333, the current execution cycle of the program segment ends.

In the case where the requested type of the output signal of the IEEE 1394 interface 112 is the DV type while the reproduced AV data are of the MPEG format, the program enters the step S333 so that the dummy data are made to correspond to the DV encoding procedure and the switch SW3 is controlled to feed the dummy data to the 1394 link layer block 112d. Thus, in this case, the combination of the 1394 link layer block 112d and the 1394 physical layer block 112e generates IEEE 1394 packets loaded with the dummy data (the DV dummy data). The IEEE1394 packets loaded with the dummy data are transmitted from the IEEE 1394 interface 112 to an external device via the IEEE 1394 input/output terminal 132.

The step S322 refers to the output type information, and thereby decides whether or not the requested type of the output signal of the IEEE 1394 interface 112 is the MPEG type. When the requested type of the output signal of the IEEE 1394 interface 112 is the MPEG type, the program advances from the step S322 to a step S327. Otherwise, the program advances from the step S322 to a step S323.

The step S327 connects the movable contact of the switch SW2 to its fixed contact 2b. As a result, the switch SW2 selects the MPEG transport packet segment stream outputted by the MPEG processor 112b, and passes the selected stream to the switch SW3.

A step S328 following the step S327 checks the reproduced AV data outputted by the reproducing signal processor 109, and thereby decides whether or not the reproduced AV data are of the MPEG format. When the reproduced AV data are of the MPEG format, the program advances from the step S328 to a step S330. Otherwise, the program advances from the step S328 to a step S329.

The step S330 connects the movable contact of the switch SW3 to its fixed contact 3a. As a result, the switch SW3 selects the streaming data outputted by the switch SW2, and passes the selected streaming data to the 1394 link layer block 112d. After the step S330, the current execution cycle of the program segment ends.

In the case where the requested type of the output signal of the IEEE 1394 interface 112 is the MPEG type and the reproduced AV data are of the MPEG format, the program advances through the steps S327 and S330 so that the switches SW2 and SW3 are controlled to feed the MPEG transport packet segment stream inclusive of the reproduced MPEG data to the 1394 link layer block 112d. Thus, in this case, the combination of the 1394 link layer block 112d and the 1394 physical layer block 112e generates IEEE 1394 packets loaded with the reproduced MPEG data. The IEEE 1394 packets loaded with the reproduced MPEG data are transmitted from the IEEE 1394 interface 112 to an external device via the IEEE 1394 input/ output terminal 132.

The step S329 connects the movable contact of the switch SW3 to its fixed contact 3b. As a result, the switch SW3 selects the dummy data outputted by the adjustment data generator 112c, and passes the selected dummy data to the 1394 link layer block 112d. Preferably, the step S329 controls the adjustment data generator 112c so that the dummy data generated and outputted by the adjustment data generator 112c will be of the format corresponding to the MPEG encoding procedure. After the step S329, the current execution cycle of the program segment ends.

In the case where the requested type of the output signal of the IEEE 1394 interface 112 is the MPEG type while the reproduced AV data are of the DV format, the program enters the step S329 so that the dummy data are made to correspond to the MPEG encoding procedure and the switch SW3 is controlled to feed the dummy data to the 1394 link layer block 112d. Thus, in this case, the combination of the 1394 link layer block 112d and the 1394 physical layer block 112e generates IEEE 1394 packets loaded with the dummy data (the MPEG dummy data). The IEEE1394 packets loaded with the dummy data are transmitted from the IEEE 1394 interface 112 to an external device via the IEEE1394 input/output terminal 132.

The step S323 connects the movable contact of the switch SW3 to its fixed contact 3a. As a result, the switch SW3 selects the streaming data outputted by the switch SW2, and passes the selected streaming data to the 1394 link layer block 112d.

A step S324 following the step S323 checks the reproduced AV data outputted by the reproducing signal processor 109, and thereby decides whether or not the reproduced AV data are of the DV format. When the reproduced AV data are of the DV format, the program advances from the step S324 to a step S326. Otherwise, the program advances from the step S324 to a step S325.

The step S325 connects the movable contact of the switch SW2 to its fixed contact 2b. As a result, the switch SW2 selects the MPEG transport packet segment stream outputted by the MPEG processor 112b, and passes the selected stream to the switch SW3. After the step S325, the current execution cycle of the program segment ends.

In the case where the requested type of the output signal of the IEEE 1394 interface 112 is the automatic type and the reproduced AV data are of the MPEG format, the program advances through the steps S323 and S325 so that the switches SW2 and SW3 are controlled to feed the MPEG transport packet segment stream inclusive of the reproduced MPEG data to the 1394 link layer block 112d. Thus, in this case, the combination of the 1394 link layer block 112d and the 1394 physical layer block 112e generates IEEE 1394 packets loaded with the reproduced MPEG data. The IEEE 1394 packets loaded with the reproduced MPEG data are transmitted from the IEEE 1394 interface 112 to an external device via the IEEE 1394 input/ output terminal 132.

The step S326 connects the movable contact of the switch SW2 to its fixed contact 2a. As a result, the switch SW2 selects the data block stream outputted by the DV processor 112a, and passes the selected stream to the switch SW3. After the step S326, the current execution cycle of the program segment ends.

In the case where the requested type of the output signal of the IEEE 1394 interface 112 is the automatic type and the reproduced AV data are of the DV format, the program advances through the steps S323 and S326 so that the switches SW2 and SW3 are controlled to feed the data block stream inclusive of the reproduced DV data to the 1394 link layer block 112d. Thus, in this case, the combination of the 1394 link layer block 112d and the 1394 physical layer block 112e generates IEEE 1394 packets loaded with the reproduced DV data. The IEEE 1394 packets loaded with the reproduced DV data are transmitted from the IEEE 1394 interface 112 to an external device via the IEEE 1394 input/ output terminal 132.

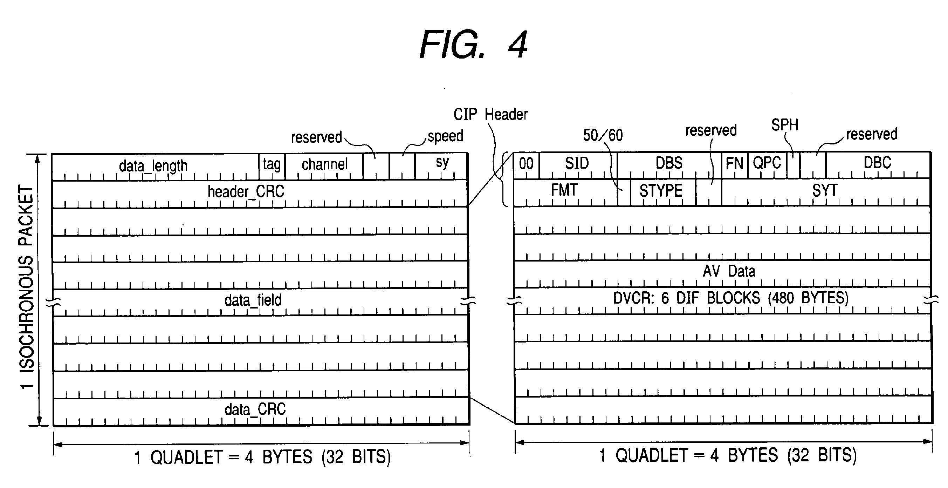

The IEEE1394 interface 112 utilizes the audio-video/control protocol (the AV/C protocol) in sending the DV data. The AV/C protocol prescribes the structure of the AV data (the DV data) sent by the IEEE 1394 interface 112 which is operating in the isochronous transmission mode. During the isochronous transmission mode of operation, the IEEE 1394 interface 112 generates a sequence of isochronous packets loaded with the AV data (the DV data). As shown in Fig. 4, each isochronous packet has a data field loaded with a CIP (common isochronous packet) header and real-time AV data (real-time DV data).

According to the DV standards, AV data are separated into 80-byte data blocks, and are transmitted on a block-by-block basis. The 80-byte data blocks are also called the DIF blocks. DIF blocks are distributed to isochronous packets (IEEE 1394 packets) in a manner such that 6 DIF blocks are placed in each isochronous packet. Therefore, 6 DIF blocks are transmitted per isochronous packet (IEEE1394 packet).

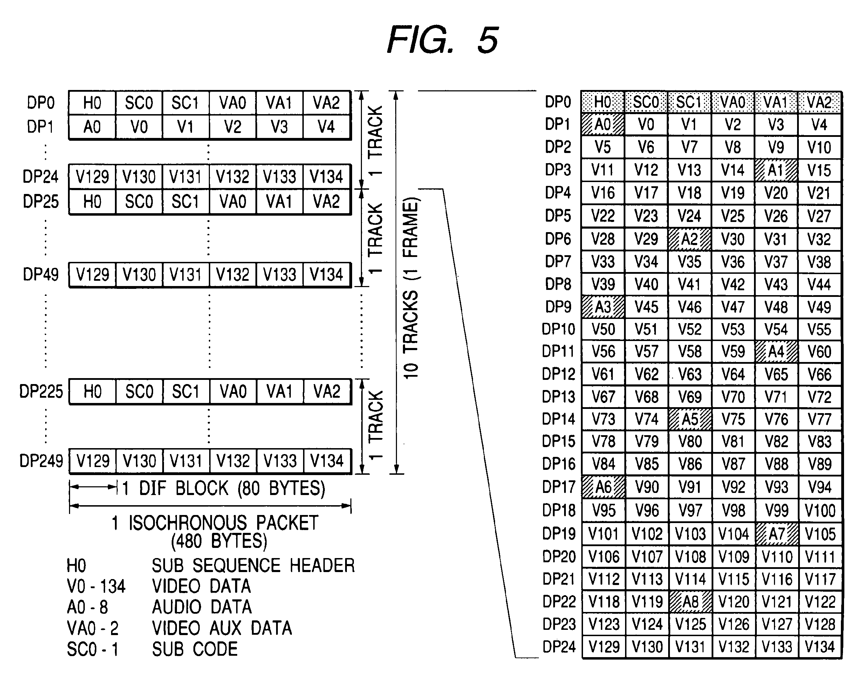

As shown in Fig. 5, every amount of DV data which corresponds to one track is assigned to 150 DIF blocks having 1 header block H0, 135 video data blocks V0-V134, 9 audio data blocks A0-A8, 3 video AUX data blocks VA0-VA2, and 2 subcode data blocks SC0 and SC1. The 150 DIF blocks are separated into 25 6-block groups assigned to 25 isochronous packets respectively. In the case of DV data of the NTSC system, 10 tracks compose one video frame. Thus, every 1-frame amount of DV data corresponds to 250 isochronous packets. Every 30-frame amount of DV data corresponds to 7,500 isochronous packets. Normally, a time interval of 1 second is occupied by 30 video frames. The time length of one cycle (one period) of the isochronous transmission is equal to 125 µs. Thus, a time interval of 1 second contains 8,000 cycles of the isochronous transmission. Accordingly, DV data can be transmitted on a real-time basis by using isochronous packets (IEEE1394 packets).

The IEEE 1394 interface 112 utilizes the AV/C protocol also in sending the MPEG data, that is, the MPEG transport packet stream. The MPEG standards prescribe that an encoded MPEG data stream should be distributed to 188-byte packets, and be transmitted on a packet-by-packet basis. The 188-byte packets are referred to as the MPEG transport packets.

MPEG transport packets contain time information called PCR (program clock reference) generated in response to a 27-MHz system clock signal used for MPEG encoding. The MPEG transport packets are sent from a transmission side to a reception side. The reception side extracts the PCR from the MPEG transport packets, and corrects the count value of a reception-side system clock signal in response to the extracted PCR. In the case where the delay time concerning the data reception varies, the reception-side system clock signal would fluctuate in frequency and period and hence the indication of display data would be wrong. To prevent such a problem, the transmission of MPEG transport packets is designed as follows. The transmission side adds 4-byte time stamps to MPEG transport packets. The time stamps are previously chosen in view of the longest delay time caused during the transmission. The time-stamp-added MPEG transport packets are sent from the transmission side to the reception side. The reception side extracts the time stamps from the MPEG transport packets, and manages the timing of MPEG decoding in response to the extracted time stamps to compensate for a variation in the delay time.

During the isochronous transmission mode of operation, the size of data sent by the IEEE1394 interface 112 for 1 cycle is fixed in order to provide a proper data transmission rate. For example, a 4-byte time stamp is added to every 188-byte MPEG transport packet to form a 192-byte block. The 192-byte block is divided into eight 24-byte segments which are sequentially transmitted. Under these conditions, MPEG transport packets can be sent at an optimal transmission data rate. In the case where every 24-byte segment is sent for 1 cycle of the isochronous transmission, the transmission data rate is equal to 1.536 Mbps (24 bytes by 8000 cycles by 8 bits). Thus, a data size of 24 bytes is suited for the transmission of MPEG data related to a data rate of about 1.53 Mbps.

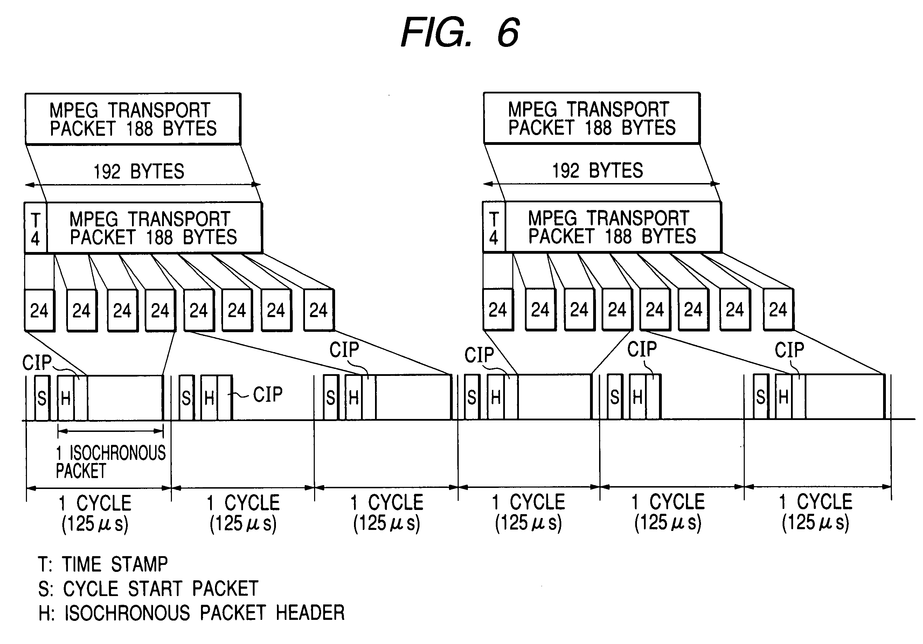

With reference to Fig. 6, MPEG transport packets are loaded with MPEG data related to a data rate of about 4 Mbps. As shown in Fig. 6, a 4-byte time stamp T is added to every 188-byte MPEG transport packet to form a 192-byte block. The 192-byte block is divided into eight 24-byte segments. First four 24-byte segments among the eight 24-byte segments are placed in an isochronous packet while second four 24-byte segments thereamong are placed in a later isochronous packet. In this way, four 24-byte segments are assigned to one isochronous packet (one IEEE 1394 packet). In this case, the IEEE1394 interface 112 transmits MPEG data at a data rate of up to 6.144 Mbps. When every other isochronous packet is used to carry four 24-byte segments, the data transmission rate is equal to 3.072 Mbps. As shown in Fig. 6, it is usual that 1 cycle of the isochronous transmission contains only one isochronous packet. A cycle start packet S is located at an initial part of every cycle of the isochronous transmission. The cycle start packet S is followed by an isochronous packet header H. The isochronous packet header H is immediately followed by CIP header information added in accordance with the AV/C protocol. Normally, the CIP header information is followed by four 24-byte segments. The CIP header information has a piece representing the format of the transmitted data, a piece representing the number of 24-byte segments into which one MPEG transport packet is divided, pieces representing the ID numbers or the order numbers of related 24-byte segments, and a piece representing the size of each 24-byte segment. Particular conditions of images represented by AV data cause the absence of 24-byte segments to be transmitted. In these conditions, an isochronous packet composed of only a header H and CIP header information is transmitted as a dummy packet.

### Second Embodiment

A second embodiment of this invention is similar to the first embodiment thereof except that the adjustment data generator 112c produces a signal representative of a single color rather than the dummy data.

### Third Embodiment

A third embodiment of this invention is similar to the first embodiment thereof except that the adjustment data generator 112c produces a signal indicative of a predetermined warning message rather than the dummy data. An example of the predetermined warning message is "source signal disagrees with selected output signal type".

### Fourth Embodiment

A fourth embodiment of this invention is similar to the first embodiment thereof except that besides the MPEG system and the DV system, another encoding/ decoding system is additionally provided. Specifically, there is an encoder of the additional system besides the DV encoder 103 and the MPEG encoder 104. Furthermore, a decoder of the additional system is provided besides the DV decoder 113 and the MPEG decoder 114. Also, there is a data processor of the additional system besides the DV processor 112a and the MPEG processor 112b. In the fourth embodiment of this invention, the output signal from the IEEE 1394 interface 112 can be changed among the types corresponding to the DV system, the MPEG system, and the additional system respectively.

### Advantages Provided by the Invention

The imaging apparatus 100 includes a plurality of different encoders, that is, the DV encoder 103 and the MPEG encoder 104. One can be selected from the DV encoder 103 and the MPEG encoder 104 as an active encoder (an actually used encoder). Normally, AV data of a format corresponding to the selected encoder are fed to the main portion (the isochronous-packet generating portion) of the IEEE 1394 interface 112. The output signal of the IEEE 1394 interface 112 can be changed among a plurality of different types including the DV type and the MPEG type. In the event that the selected encoder disagrees with the selected type of the output signal of the IEEE1394 interface 112, the output signal of the IEEE 1394 interface 112 is set to the fixed-value AV data (the dummy data) so that the operation of an external reception-side device connected with the imaging apparatus 100 can be prevented from becoming wrong. The imaging apparatus 100 is convenient to a user since the type of the output signal of the IEEE 1394 interface can be changed in accordance with the encoding/decoding type used by the external reception-side device.

During the playback mode (the reproducing mode) of operation, the imaging apparatus 100 detects whether the reproduced data are of the DV format or the MPEG format. Normally, AV data of a format corresponding to the detected format are fed to the main portion (the isochronous-packet generating portion) of the IEEE 1394 interface 112. The output signal of the IEEE 1394 interface 112 can be changed among a plurality of different types including the DV type and the MPEG type. In the event that the detected format disagrees with the selected type of the output signal of the IEEE 1394 interface 112, the output signal of the IEEE 1394 interface 112 is set to the fixed-pattern data (the dummy data) so that the operation of an external reception-side device connected with the imaging apparatus 100 can be prevented from becoming wrong. The imaging apparatus 100 is convenient to a user since the type of the output signal of the IEEE 1394 interface can be changed in accordance with the encoding/decoding type used by the external reception-side device.

## Claims

1. An AV data outputting apparatus comprising:
first selecting means (SW2) for selecting one from first AV data and second AV data, the first AV data resulting from encoding original data in a first encoding procedure, the second AV data resulting from encoding the original data in a second encoding procedure different from the first encoding procedure;
fixed-pattern data generating means (112c) for generating third AV data representative of either a first fixed pattern or a second fixed pattern, the first fixed pattern corresponding to the first encoding procedure, the second fixed pattern corresponding to the second encoding procedure;
second selecting means (SW3) for selecting one from the AV data selected by the first selecting means (SW2) and the third AV data generated by the fixed-pattern data generating means (112c);
outputting means (112d, 112e) for outputting the AV data selected by the second selecting means (SW3);
output data type designating means (110b) for designating a type of encoding about the AV data outputted by the outputting means (112d, 112e) among different types corresponding to the first and second encoding procedures respectively;
deciding means (111) for deciding whether or not the encoding procedure related to the AV data selected by the first selecting means (SW2) corresponds to the encoding type designated by the output data type designating means (110b); and
controlling means (111) for controlling the second selecting means (SW3) to select the AV data selected by the first selecting means (SW2) when the deciding means (111) decides that the encoding procedure related to the AV data selected by the first selecting means (SW2) corresponds to the encoding type designated by the output data type designating means (110b), and controlling the second selecting means (SW3) to select the third AV data generated by the fixed-pattern data generating means (112c) and being representative of one of the first and second fixed patterns which corresponds to the encoding type designated by the output data type designating means (110b) when the deciding means (111) decides that the encoding procedure related to the AV data selected by the first selecting means (SW2) does not correspond to the encoding type designated by the output data type designating means (110b).

2. An AV data outputting apparatus as recited in claim 1, further comprising:
a camera device (101) for outputting the original data;
a first encoder (103) for encoding the original data outputted by the camera device (101) in the first encoding procedure to generate the first AV data; and
a second encoder (104) for encoding the original data outputted by the camera device (101) in the second encoding procedure to generate the second AV data.

3. An AV data outputting apparatus as recited in claim 2, further comprising a recording medium (107), and recording means (105, 106) for recording the first and second AV data generated by the first encoder (103) and the second encoder (104) on the recording medium (107).

4. An AV data outputting apparatus as recited in claim 1, further comprising:
a recording medium (107);
reproducing means (108, 109) for reproducing a signal from the recording medium (107);
a first processor (112a) for generating the first AV data from the signal reproduced by the reproducing means (108, 109), and feeding the first AV data to the first selecting means (SW2);
a second processor (112a) for generating the second AV data from the signal reproduced by the reproducing means (108, 109), and feeding the second AV data to the first selecting means (SW2);
second deciding means (111) for deciding whether the signal reproduced by the reproducing means (108, 109) corresponds to the first encoding procedure or the second encoding procedure; and
second controlling means (111) for controlling the first selecting means (SW2) to select the first AV data when the second deciding means (111) decides that the signal reproduced by the reproducing means (108, 109) corresponds to the first encoding procedure, and controlling the first selecting means (111) to select the second AV data when the second deciding means (111) decides that the signal reproduced by the reproducing means (108, 109) corresponds to the second encoding procedure.

5. An AV data outputting apparatus as recited in claim 1, wherein the first encoding procedure is a DV encoding procedure, and the second encoding procedure is an MPEG encoding procedure.

6. An AV data outputting apparatus as recited in claim 1, wherein the outputting means (112d, 112e) comprises means (112d, 112e) for outputting the AV data selected by the second selecting means (SW3) according to an isochronous transmission procedure prescribed by the IEEE 1394-1995 standards.

7. An AV data outputting apparatus comprising:
first selecting means (SW2) for selecting one from first AV data and second AV data, the first AV data resulting from encoding original data in a first encoding procedure, the second AV data resulting from encoding the original data in a second encoding procedure different from the first encoding procedure;
fixed-pattern data generating means (112c) for selectively generating either third AV data or fourth AV data, the third AV data corresponding to the first encoding procedure, the fourth AV data corresponding to the second encoding procedure, the third AV data and the fourth AV data representing a fixed pattern;
second selecting means (SW3) for selecting one from the AV data selected by the first selecting means (SW2) and the AV data generated by the fixed-pattern data generating means (112c);
outputting means (112d, 112e) for outputting the AV data selected by the second selecting means (SW3);
output data type designating means (110b) for designating a type of encoding about the AV data outputted by the outputting means (112d, 112e) among different types corresponding to the first and second encoding procedures respectively;
deciding means (111) for deciding whether or not the encoding procedure related to the AV data selected by the first selecting means (SW2) corresponds to the encoding type designated by the output data type designating means (110b); and
controlling means (111) for controlling the second selecting means (SW3) to select the AV data selected by the first selecting means (SW2) when the deciding means (111) decides that the encoding procedure related to the AV data selected by the first selecting means (SW2) corresponds to the encoding type designated by the output data type designating means (110b), and controlling the fixed-pattern data generating means (112c) to generate the AV data corresponding to the encoding type designated by the output data type designating means (110b) and controlling the second selecting means (SW3) to select the AV data generated by the fixed-pattern data generating means (112c) when the deciding means (111) decides that the encoding procedure related to the AV data selected by the first selecting means (SW2) does not correspond to the encoding type designated by the output data type designating means (110b).

8. An imaging apparatus comprising:
a switch for selecting one from first AV data and second AV data, the first AV data resulting from either a first encoding procedure or a second encoding procedure different from the first encoding procedure, the second AV data representing a fixed-pattern and being of either a format corresponding to the first encoding procedure or a format corresponding to the second encoding procedure;
first means for loading isochronous packets with the AV data selected by the switch, and sequentially outputting the isochronous packets;
second means for designating a requested type of encoding about the AV data carried by the isochronous packets outputted by the first means among different types corresponding to the first and second encoding procedures respectively;
third means for deciding whether or not the encoding procedure related to the first AV data corresponds to the requested encoding type designated by the second means;
fourth means for controlling the switch to select the first AV data when the third means decides that the encoding procedure related to the first AV data corresponds to the requested encoding type designated by the second means; and
fifth means for causing the second AV data to be of the format corresponding to the requested encoding type designated by the second means and controlling the switch to select the second AV data when the third means decides that the encoding procedure related to the first AV data does not correspond to the requested encoding type designated by the second means.

9. An imaging apparatus comprising:
a first switch for selecting one from first AV data and second AV data, the first AV data resulting from a first encoding procedure, the second AV data resulting from a second encoding procedure different from the first encoding procedure;
first means for generating third AV data representative of a fixed pattern and being of either a format corresponding to the first encoding procedure or a format corresponding to the second encoding procedure;
a second switch for selecting one from the AV data selected by the first switch and the third AV data generated by the first means;
second means for loading isochronous packets with the AV data selected by the second switch, and sequentially outputting the isochronous packets;
third means for designating a requested type of encoding about the AV data carried by the isochronous packets outputted by the second means among different types corresponding to the first and second encoding procedures respectively;
fourth means for deciding whether or not the encoding procedure related to the AV data selected by the first switch corresponds to the requested encoding type designated by the third means;
fifth means for controlling the second switch to select the AV data selected by the first switch when the fourth means decides that the encoding procedure related to the AV data selected by the first switch corresponds to the requested encoding type designated by the third means; and
sixth means for controlling the first means to cause the third AV data generated by the first means to be of the format corresponding to the requested encoding type designated by the third means and controlling the second switch to select the third AV data generated by the first means when the fourth means decides that the encoding procedure related to the AV data selected by the first switch does not correspond to the requested encoding type designated by the third means.

10. An imaging apparatus as recited in claim 9, further comprising:
a recording medium;
seventh means for reproducing a signal from the recording medium;
a first processor for generating the first AV data from the signal reproduced by the seventh means, and feeding the first AV data to the first switch;
a second processor for generating the second AV data from the signal reproduced by the seventh means, and feeding the second AV data to the first switch;
eighth means for deciding whether the signal reproduced by the seventh means corresponds to the first encoding procedure or the second encoding procedure;
ninth means for controlling the first switch to select the first AV data when the eighth means decides that the signal reproduced by the seventh means corresponds to the first encoding procedure; and
tenth means for controlling the first switch to select the second AV data when the eighth means decides that the signal reproduced by the seventh means corresponds to the second encoding procedure.
